# EUROPÄISCHE PATENTSCHRIFT

(11) **EP 2 488 402 B1**
(45) Veröffentlichungstag und Bekanntmachung des Hinweises auf die Patenterteilung: **02.07.2014**
(21) Anmeldenummer: 10768470.6
(22) Anmeldetag: 13.10.2010
(51) Int. Cl.: B62D 3/12

(54) **ZWEIGETEILTES LENKGETRIEBEGEHÄUSE MIT FREILIEGENDER ZAHNSTANGE**
DIVIDED STEERING GEAR HOUSING HAVING AN EXPOSED TOOTHED RACK
BOÎTIER DE MÉCANISME DE DIRECTION EN DEUX PARTIES AVEC CRÉMAILLÈRE DÉGAGÉE

(30) Priorität: 15.10.2009 DE 102009049633
(43) Veröffentlichungstag der Anmeldung: 22.08.2012
(73) Patentinhaber: Ford Global Technologies, LLC, Dearborn, MI 48126 (US)
(72) Erfinder: JANZ, Bernd, 40764 Langenfeld (DE); HEIN, Paul, 42653 Solingen (DE)
(74) Vertreter: Bauer Vorberg Kayser Patentanwälte
(86) Internationale Anmeldenummer: PCT/EP2010/065364
(87) Internationale Veröffentlichungsnummer: WO 2011/045350

(56) Entgegenhaltungen:
- DE-A1- 10 024 213
- US-A1- 2006 090 581

## Beschreibung

Die Erfindung betrifft eine Zahnstangenlenkung zumindest umfassend ein Antriebselement, eine Zahnstange und eine Lagerstelle für die Zahnstange. Weiterhin betrifft die Erfindung ein Verfahren zur Herstellung einer Zahnstangenlenkung sowie eine Verwendung einer Zahnstangenlenkung.

Aus dem Stand der Technik sind Zahnstangenlenkungen bereits bekannt. Beispielsweise beschreibt die DE 100 24 213 A1 einen Aufbau eines manuellen Lenkgetriebes. Dieses weist ein Getriebegehäuse, eine darin angeordneten Zahnstange sowie ein mit einer Lenksäule verbundenes Ritzel auf. Das Getriebegehäuse umfasst zwei Gehäuseelemente für das Antriebsgetriebe und die Zahnstange. Die Gehäuseelemente sind durch ein Leichtbaurohr miteinander verbunden.

Die US 2006/090581 A1 beschreibt eine Zahnstangenlenkung bei der eine in einem Zahnstangengehäuse angeordnete Zahnstange über Kugelgelenke und ein Verbindungselement mit einem in einem separaten Gehäuseelement untergebrachten Gleitelement verbunden ist. Die Gehäuseelemente sind nur über die Zahnstange verbunden.

Nachteilig an den aus dem Stand der Technik bekannten Zahnstangenlenkungen sind das hohe Gewicht und der hohe Fertigungsaufwand oder der komplizierte und fehleranfällige Aufbau.

Die Aufgabe der Erfindung ist es, eine verbesserte Zahnstangenlenkung zur Verfügung zu stellen. Insbesondere soll eine Zahnstangenlenkung zur Verfügung gestellt werden, die ein geringeres Gewicht aufweist. Weiterhin ist es Aufgabe der Erfindung, ein Verfahren zur Herstellung einer Zahnstangenlenkung und eine Möglichkeit der Verwendung vorzuschlagen.

Die Aufgabe wird erfindungsgemäß mittels einer Zahnstangenlenkung nach Anspruch 1, einem Verfahren nach Anspruch 6, sowie einer Verwendung einer Zahnstangenlenkung nach Anspruch 11 gelöst. Weitere vorteilhafte Ausgestaltungen sind aus der nachfolgenden Beschreibung sowie den Unteransprüchen zu entnehmen.

Es wird eine Zahnstangenlenkung zumindest umfassend ein Antriebselement, eine Zahnstange und eine Lagerstelle für die Zahnstange vorgeschlagen, wobei die Zahnstange einen gezahnten ersten Teil und einen zweiten Teil aufweist, wobei zumindest der erste Teil und das Antriebselement ein Lenkgetriebe ausbilden und das Lenkgetriebe von einem Lenkgetriebegehäuse umgeben ist und wobei die Lagerstelle von einem Lagergehäuse umgeben ist, wobei der zweite Teil der Zahnstange in zumindest einem Abschnitt zwischen Lenkgetriebegehäuse und Lagergehäuse frei liegt und die Lagerstelle ein sphärisches Gleitlager umfasst.

Die einzelnen Merkmale der beschriebenen Ausgestaltungen sind nicht auf diese beschränkt, sondern können untereinander und mit anderen Merkmalen zu weiteren Ausgestaltungen verknüpft werden.

Unter einem freiliegenden Abschnitt im Sinne der Erfindung ist ein Abschnitt der Zahnstange beziehungsweise des zweiten Teils der Zahnstange zu verstehen, der von keinem Gehäuse oder keinem anderem Bauteil der Zahnstangenlenkung umgeben ist. Der freiliegende Abschnitt kann je nach Lenkungseinschlag variieren, das heißt ein anderer Bereich des zweiten Teils sein. So bildet beispielsweise bei einem Linkseinschlag der Zahnstangenlenkung ein anderer Bereich des zweiten Teiles den freilegenden Abschnitt aus, als bei einem Rechtseinschlag. Bauteile, die die Zahnstangenlenkung als solche umgeben, wie beispielsweise eine Karosserie eines Fahrzeuges, in der die Zahnstangenlenkung eingebaut ist, können vorgesehen sein. Der zweite Teil kann gezahnt oder ungezahnt ausgestaltet sein. Des Weiteren kann der zweite Teil jede beliebige Querschnittgeometrie aufweisen.

Ein wesentlicher Vorteil der vorgeschlagenen Zahnstangenlenkung besteht in der Materialeinsparung, die zu einer Gewichtsreduktion der Zahnstangenlenkung führt. Somit wird eine möglichst große Gewichtseinsparung gegenüber den derzeit üblichen Lenkgetriebebauformen realisiert. Entsprechend ist auch der Fertigungsaufwand für die Herstellung der Zahnstangenlenkung geringer.

Das Gehäuse eines aus dem Stand der Technik bekannten Lenkgetriebes wird bei der vorgeschlagenen Zahnstangenlenkung aufgeteilt in zwei funktionelle Baugruppen. Eine erste Baugruppe besteht aus dem eigentlichen Getriebe, welches die Funktion besitzt, eine Drehbewegung in eine translatorische Bewegung umzusetzen. Dieses Getriebe befindet sich vorzugsweise vor negativen Umwelteiflüssen geschützt in dem Lenkgetriebegehäuse, aus welchem die translatorisch und/oder rotatorisch bewegten Teile vorzugsweise abgedichtet herausgeführt sind. In einer Ausgestaltung ist vorgesehen, dass eine hydraulische oder elektrische Lenkkraftunterstützung in dem Lenkgetriebegehäuse angeordnet ist.

Eine zweite Baugruppe besteht aus einem Lagergehäuse, in welchem sich ein Axiallager befindet das schwenkbar ausgestaltet ist. Erfindungsgemäß ist ein sphärisch gelagertes Gleitlager vorgesehen. In diesem Gleitlager wird die Zahnstange axial beweglich und radial geführt. Das Gleitlager leitet vorzugsweise die durch die Spurstange in die Zahnstange eingeleiteten Querkräfte über das Gehäuse in die Anschraubflächen ein. Vorzugsweise werden alle auftretenden Längskräfte, auch Zahnstangenkräfte genannt, über die Anschraubflächen des getriebebeinhaltenden Gehäuses übertragen.

Das Lagergehäuse kann unter Anderem zur Erhaltung einer Dauerschmierung dienen. Unter einer Dauerschmierung wird beispielweise eine Schmierung mit Fett, wie beispielsweise MoS₂ Schmierfett verstanden. Das Fett wird von dem Lagergehäuse eingeschlossen, so dass ein Austausch oder Nachfüllen des Fettes nur bei Austausch von Teilen des Lagergehäuses oder des Lagers notwendig ist.

Das Antriebselement sowie eine Zahnung des gezahnten Teiles der Zahnstange können beliebige Formen aufweisen. Das Antriebselement weist in einer bevorzugten Ausgestaltung ein Ritzel auf. Insbesondere sind Zahnstangen mit konstanter und variabler Übersetzung in unterschiedlichen Ausgestaltungen vorgesehen. Die variable Übersetzung wird durch eine Veränderung der Verzahnungsgeometrie über den Zahnstangenhub realisiert. Besonders bevorzugt ist eine progressive Übersetzung des Lenkgetriebes.

In einer weiteren Ausgestaltung ist vorgesehen, dass die Zahnstange zumindest im zweiten Teil ein Korrosionsschutzmittel aufweist. Vorzugsweise ist zumindest ein Bereich des zweiten Teils korrosionsgeschützt, der definiert ist durch die Vereinigungsmenge der freien Abschnitte der maximalen Lenkeinschläge nach links und nach rechts. In einer weiteren Ausgestaltung ist vorgesehen, dass die Zahnstange auch im ersten Teil einen Korrosionsschutz aufweist.

Unter Korrosionsschutzmitteln werden im Sinne der Erfindung beispielsweise Öle, Wachse, Lacke, Chemikalien oder Beschichtungen beispielsweise aus Kunststoffen, Metallen oder Metalloxiden verstanden, die eine Korrosion während der Lebenszeit der Zahnstange vermeiden oder hinauszögern.

Unter einer Korrosion wird eine Reaktion eines metallischen Werkstoffes mit seiner Umgebung verstanden, die eine messbare Veränderung des Werkstoffes bewirkt und zu einer Beeinträchtigung der Funktion eines metallischen Bauteils oder eines ganzen Systems führen kann. In den meisten Fällen ist die Reaktion elektrochemischer Natur, in einigen Fällen kann sie chemischer oder metallphysikalischer Natur sein. Insbesondere sei hiermit im Rahmen dieser Offenbarung vollumfänglich auf die DIN EN 8044 verwiesen.

In einer weiteren Ausgestaltung ist vorgesehen, dass die Zahnstange zumindest im zweiten Teil einen nicht korrodierenden Werkstoff umfasst. Ein nicht korrodierender Werkstoff kann beispielsweise ein nicht metallischer Werkstoff sein. In einer weiteren Ausführungsform ist ein hochlegierter Stahl, sogenannter nicht rostender Stahl vorgesehen. Ein nicht korrodierender Werkstoff ist bevorzugt ein Werkstoff, der über die Lebenszeit der Zahnstange beziehungsweise des Fahrzeuges in dem die Zahnstange verbaut ist, bei Nutzung der Zahnstange in einer für ein entsprechendes Fahrzeug typischen Umgebung keine Korrosionserscheinungen aufweist, die zu einem Versagen der Zahnstangenlenkung führen.

In einer weiteren Ausgestaltung ist vorgesehen, dass das Lenkgetriebegehäuse an Austrittsstellen der Zahnstange jeweils durch einen Faltenbalg abgeschlossen ist. Der Faltenbalg weist in einer Ausgestaltung ein Material auf, das zumindest Gummi oder einen Kunststoff umfasst. Vorzugsweise dient der Faltenbalg zur Abdichtung des Lenkgetriebegehäuses an der Austrittstelle der Zahnstange, vorzugsweise zur Vermeidung von Fettaustritt aus dem Lenkgetriebegehäuse.

In einer Ausgestaltung verbindet ausschließlich die Zahnstange das Lenkgetriebegehäuse mit dem Lagergehäuse. Es kann vorgesehen sein, dass die Zahnstangenlenkung außer der Zahnstange kein Bauteil aufweist, das das Lenkgetriebegehäuse mit dem Lagergehäuse verbindet. In einer weiteren Ausgestaltung ist vorgesehen, dass Leitungen zwischen dem Lenkgetriebegehäuse uns dem Lagergehäuse vorgesehen sind, die diese verbinden. In einer weiteren Ausführungsform ist vorgesehen, dass zwischen Lenkgetriebegehäuse und Lagergehäuse Stabilisierungsmittel vorgesehen sind. Vorzugsweise können die Stabilisierungsmittel nach einer Montage der Zahnstangenlenkung in ein Fahrzeug von der Zahnstangenlenkung entnommen werden.

Die vorliegende Erfindung betrifft weiterhin ein Verfahren zur Herstellung einer Zahnstangenlenkung, wobei das Verfahren folgende Schritte umfasst: Bereitstellen eines Antriebselementes, einer Zahnstange sowie einer Lagerstelle für die Zahnstange, die durch ein sphärisches Gleitlager gebildet ist, Bereitstellen eines Lenkgetriebegehäuses und eines Lagergehäuses, Einbau der Lagerstelle in das Lagergehäuse, Einbau zumindest des Antriebselementes und zumindest einen gezahnten ersten Teil der Zahnstange in das Lenkgetriebegehäuse, so dass zumindest ein Abschnitt eines zweiten Teils der Zahnstange zwischen Lenkgetriebegehäuse und Lagergehäuse frei liegt.

Insbesondere eignet sich das Verfahren zur Herstellung der oben bereits ausführlich beschriebenen Zahnstangenlenkung mit den bevorzugten Merkmalen.

Ein weiterer Gedanke der Erfindung ist eine Verwendung einer oben beschriebenen Zahnstangenlenkung in einem Kraftfahrzeug, bevorzugt in einem Personenkraftfahrzeug.

Weitere vorteilhafte Ausgestaltungen gehen aus den nachfolgenden Zeichnungen hervor. Die dort dargestellten Figuren sind jedoch nicht beschränkend auszulegen, vielmehr können die dort beschriebenen Merkmale untereinander und mit den oben beschriebenen Merkmalen zu weiteren Ausgestaltungen kombiniert werden. Gleiche Teile oder Teile mit gleicher Funktion weisen im Folgenden die gleichen Bezugszeichen auf. Es zeigen:
Fig. 1 eine Zahnstangenlenkung; und
Fig. 2 einen Schnitt durch ein Lenkgetriebegehäuse.

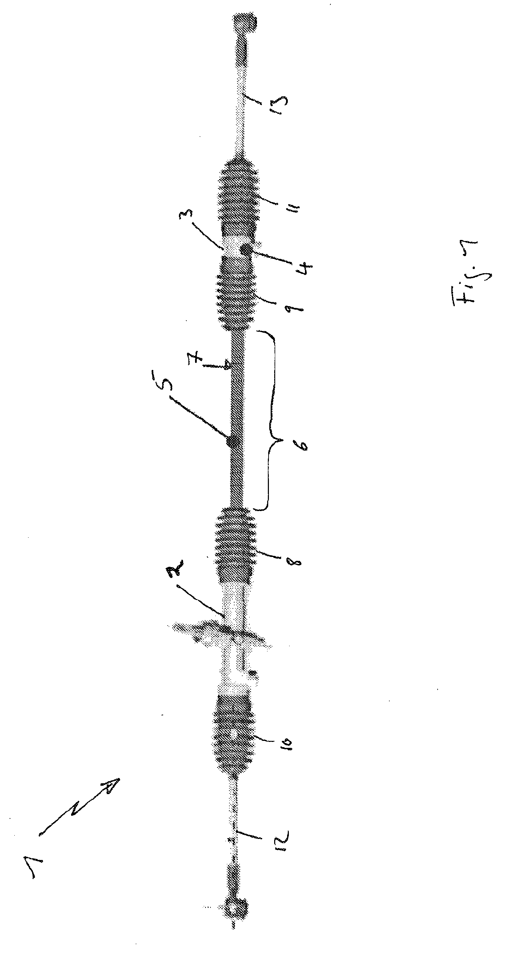

Fig. 1 zeigt eine Zahnstangenlenkung 1, mit einem Lenkgetriebegehäuse 2 und einem Lagergehäuse 3 für eine hier durch das Lagergehäuse 3 verdeckte Lagerstelle 4. Eine Zahnstange 5 erstreckt sich zumindest vom Lenkgetriebegehäuse 2 zum Lagergehäuse 3, wobei ein Abschnitt 6 der Zahnstange 5 frei liegt. Die Zahnstange 5 weist zumindest in Abschnitt 6 ein Korrosionsmittel auf, das auf eine Oberfläche 7 der Zahnstange 5 aufgebracht ist. Faltenbälge 8, 9 schließen das Lenkgetriebegehäuse 2 und das Lagergehäuse 3 zur Zahnstange 5 hin ab. Des Weiteren schließen Faltenbälge 10, 11 das Lagergehäuse 3 und das Lenkgetriebegehäuse 2 zu den Lenkstangen 12, 13 hin ab.

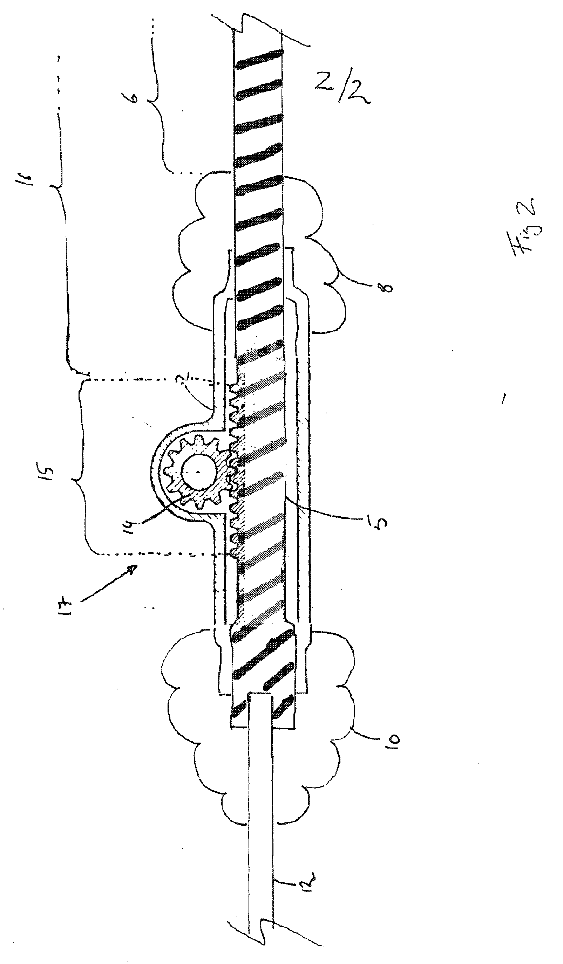

Fig. 2 zeigt eine schematische Schnittansicht durch ein Lenkgetriebegehäuse 2. Das Lenkgetriebegehäuse 2 ist über einen Faltenbalg 8 zum freien Abschnitt 6 der Zahnstange 5 und über den Faltenbalg 10 zu der Lenkstange 12 hin abgeschlossen. In dem Lenkgetriebegehäuse 2 finden sich zumindest ein Antriebselement 14, das als Ritzel ausgestaltet ist, und der gezahnte erste Teil 15 der Zahnstange 5, die zusammen ein Lenkgetriebe 17 ausbilden. Der zweite ungezahnte Teil 16 ragt zumindest in einigen Betriebspositionen beziehungsweise bei bestimmten Lenkungseinschlägen in das Lenkgetriebegehäuse 2 hinein.

## Patentansprüche

1. Zahnstangenlenkung (1) zumindest umfassend ein Antriebselement (14), eine Zahnstange (5) und eine Lagerstelle (4) für die Zahnstange (5), wobei die Zahnstange (5) einen gezahnten ersten Teil (15) und einen zweiten Teil (16) aufweist, wobei zumindest der erste Teil (15) und das Antriebselement (14) ein Lenkgetriebe ausbilden und das Lenkgetriebe (17) von einem Lenkgetriebegehäuse (2) umgeben ist und wobei die Lagerstelle (4) von einem Lagergehäuse (3) umgeben ist, **dadurch gekennzeichnet, dass** der zweite Teil (16) der Zahnstange (5) in zumindest einem Abschnitt (6) zwischen Lenkgetriebegehäuse (2) und Lagergehäuse (3) frei liegt und die Lagerstelle (4) ein sphärisches Gleitlager umfasst.

2. Zahnstangenlenkung (1) nach Anspruch 1, **dadurch gekennzeichnet, dass** die Zahnstange (5) zumindest im zweiten Teil (16) ein Korrosionsschutzmittel aufweist.

3. Zahnstangenlenkung (1) nach einem der vorhergehenden Ansprüche, **dadurch gekennzeichnet, dass** die Zahnstange (5) zumindest im zweiten Teil (16) einen nicht korrodierenden Werkstoff umfasst.

4. Zahnstangenlenkung (1) nach einem der vorhergehenden Ansprüche, **dadurch gekennzeichnet, dass** das Lenkgetriebegehäuse (2) an Austrittsstellen der Zahnstange (5) jeweils durch einen Faltenbalg abgeschlossen ist.

5. Zahnstangenlenkung (1) nach einem der vorhergehenden Ansprüche, **dadurch gekennzeichnet, dass** ausschließlich die Zahnstange (5) das Lenkgetriebegehäuse (2) mit dem Lagergehäuse (3) verbindet.

6. Verfahren zur Herstellung einer Zahnstangenlenkung (1), **dadurch gekennzeichnet, dass** das Verfahren folgende Schritte umfasst:
■ Bereitstellen eines Antriebselementes (14), einer Zahnstange (5) sowie einer Lagerstelle (4), die durch ein sphärisches Gleitlager gebildet ist,
■ Bereitstellen eines Lenkgetriebegehäuses (2) und eines Lagergehäuses (2),
■ Einbau der Lagerstelle (4) in das Lagergehäuse (3),
■ Einbau zumindest des Antriebselementes (14) und zumindest einen gezahnten ersten Teil (15) der Zahnstange (5) in das Lenkgetriebegehäuse, so dass zumindest ein Abschnitt eines zweiten Teils der Zahnstange zwischen Lenkgetriebegehäuse und Lagergehäuse frei liegt.

7. Verfahren nach Anspruch 6, **dadurch gekennzeichnet, dass** zumindest ein Bereich des zweiten Teils (15) der Zahnstange (5) korrosionsgeschützt wird.

8. Verfahren nach einem der Ansprüche 6 oder 7, **dadurch gekennzeichnet, dass** die Zahnstange (5) zumindest im zweiten Teil (16) aus einem nicht korrodierenden Werkstoff gefertigt wird.

9. Verfahren nach einem der Ansprüche 6 bis 8, **dadurch gekennzeichnet, dass** das Lenkgetriebegehäuse (2) einer Austrittsstelle der Zahnstange (5) durch einen Faltenbalg (8) abgeschlossen wird.

10. Verfahren nach einem der Ansprüche 6 bis 9, **dadurch gekennzeichnet, dass** die Zahnstangenlenkung (1) derart gefertigt wird, dass ausschließlich die Zahnstange (5) das Lenkgetriebegehäuse (2) mit dem Lagergehäuse (3) verbindet.

11. Verwendung einer Zahnstangenlenkung (1) nach einem der Ansprüche 1 bis 5 in einem Kraftfahrzeug.

## Claims

1. A rack-and-pinion steering system (1), at least comprising a drive element (14), a toothed rack (5) and a bearing point (4) for the toothed rack (5), wherein the toothed rack (5) comprises a toothed first part (15) and a second part (16), at least the first part (15) and the drive element (14) forming a steering gear, and the steering gear (17) being surrounded by a steering gear housing (2), and the bearing point (4) being surrounded by a bearing housing (3), **characterised in that** the second part (16) of the toothed rack (5) is exposed in at least one section (6) between the steering gear housing (2) and the bearing housing (3) and the bearing point (4) comprises a spherical slide bearing.

2. The rack-and-pinion steering system (1) according to claim 1, **characterised in that** the toothed rack (5), at least in the second part (16), comprises an anti-corrosion agent.

3. The rack-and-pinion steering system (1) according to any one of the preceding claims, **characterised in that** the toothed rack (5), at least in the second part (16), comprises a non-corroding material.

4. The rack-and-pinion steering system (1) according to any one of the preceding claims, **characterised in that** the steering gear housing (2), at exit points of the toothed rack (5), is respectively sealed by a bellows.

5. The rack-and-pinion steering system (1) according to any one of the preceding claims, **characterised in that** only the toothed rack (5) connects the steering gear housing (2) with the bearing housing (3).

6. A method for producing a rack-and-pinion steering system (1), **characterised in that** the method comprises the following steps:
• providing a drive element (14), a toothed rack (5) as well as a bearing point (4) formed by a spherical slide bearing,
• providing a steering gear housing (2) and a bearing housing (2),
• installing the bearing point (4) into the bearing housing (3),
• installing at least the drive element (14) and at least one toothed first part (15) of the toothed rack (5) into the steering gear housing, so that at least one section of a second part of the toothed rack is exposed between the steering gear housing and the bearing housing.

7. The method according to claim 6, **characterised in that** at least one area of the second part (15) of the toothed rack (5) is protected against corrosion.

8. The method according to any one of the claims 6 or 7, **characterised in that** the toothed rack (5), at least in the second part (16), is produced from a non-corroding material.

9. The method according to any one of the claims 6 to 8, **characterised in that** the steering gear housing (2), at an exit point of the toothed rack (5), is sealed by a bellows (8).

10. The method according to any one of the claims 6 to 9, **characterised in that** the rack-and-pinion steering system (1) is produced in such a way that only the toothed rack (5) connects the steering gear housing (2) with the bearing housing (3).

11. Use of a rack-and-pinion steering system (1) according to any one of the claims 1 to 5 in a motor vehicle.

## Revendications

1. Direction à crémaillère (1) comprenant au moins un élément d'entraînement (14), une crémaillère (5) et un point de support (4) pour ladite crémaillère (5), la crémaillère (5) présentant une première partie dentée (15) et une deuxième partie (16), au moins ladite première partie (15) et ledit élément d'entraînement (14) formant un mécanisme de direction et ledit mécanisme de direction (17) étant entouré d'un boîtier de mécanisme de direction (2) et ledit point de support (4) étant entouré d'un boîtier de palier (3), **caractérisée par le fait que** ladite deuxième partie (16) de la crémaillère (5) est dégagée dans au moins une portion (6) située entre ledit boîtier de mécanisme de direction (2) et ledit boîtier de palier (3) et que ledit point de support (4) comprend un palier lisse sphérique.

2. Direction à crémaillère (1) selon la revendication 1, **caractérisée par le fait que** la crémaillère (5) présente un moyen anti-corrosion dans ladite deuxième partie (16) au moins.

3. Direction à crémaillère (1) selon l'une quelconque des revendications précédentes, **caractérisée par le fait que** ladite crémaillère (5) comprend un matériau non corrosif dans la deuxième partie (16) au moins.

4. Direction à crémaillère (1) selon l'une quelconque des revendications précédentes, **caractérisée par le fait que** ledit boîtier de mécanisme de direction (2) est terminé, sur des points de sortie de la crémaillère (5), respectivement par un soufflet.

5. Direction à crémaillère (1) selon l'une quelconque des revendications précédentes, **caractérisée par le fait que** c'est exclusivement la crémaillère (5) qui relie le boîtier de mécanisme de direction (2) au boîtier de palier (3).

6. Procédé de fabrication d'une direction à crémaillère (1), **caractérisé par le fait que** le procédé comprend les étapes suivantes :
- fournir un élément d'entraînement (14), une crémaillère (5) ainsi qu'un point de support (4) qui est constitué par un palier lisse sphérique,
- fournir un boîtier de mécanisme de direction (2) et un boîtier de palier (3),
- monter ledit point de support (4) dans ledit boîtier de palier (3),
- monter au moins ledit élément d'entraînement (14) et au moins une première partie dentée (15) de la crémaillère (5) dans ledit boîtier de mécanisme de direction de sorte qu'au moins une portion d'une deuxième partie de la crémaillère, située entre le boîtier de mécanisme de direction et le boîtier de palier est dégagée.

7. Procédé selon la revendication 6, **caractérisé par le fait qu'**au moins une zone de la deuxième partie (16) de la crémaillère (5) est protégée contre la corrosion.

8. Procédé selon l'une quelconque des revendications 6 ou 7, **caractérisé par le fait que** la crémaillère (5) est réalisée, au moins dans ladite deuxième partie (16), à partir d'un matériau non corrosif.

9. Procédé selon l'une quelconque des revendications 6 à 8, **caractérisé par le fait que** le boîtier de mécanisme de direction (2) est terminé, sur un point de sortie de la crémaillère (5), par un soufflet (8).

10. Procédé selon l'une quelconque des revendications 6 à 9, **caractérisé par le fait que** la direction à crémaillère (1) est réalisée de telle manière que c'est exclusivement la crémaillère (5) qui relie le boîtier de mécanisme de direction (2) au boîtier de palier (3).

11. Utilisation d'une direction à crémaillère (1) selon l'une quelconque des revendications 1 à 5 dans un véhicule automobile.
